Europäisches Patentamt

European Patent Office

Office européen des brevets

(11) Publication number: **0 660 109 A1**

# EUROPEAN PATENT APPLICATION

(21) Application number: **94119512.5**

(51) Int. Cl.⁶: **G01N 25/14**

(22) Date of filing: **09.12.94**

(30) Priority: **20.12.93 US 169179**

(43) Date of publication of application:
**28.06.95 Bulletin 95/26**

(84) Designated Contracting States:
**DE ES FR IT NL**

(71) Applicant: **CORNING INCORPORATED**
**1 Riverfront Plaza**
**Corning, N.Y. 14831 (US)**

(72) Inventor: **Bruce, Mark Lee, Corning**
**Incorporated**
**Patent Department,**
**SP FR02-12**
**Corning, NY 14831 (US)**

(74) Representative: **Reinhard, Skuhra, Weise**
**Postfach 44 01 51**
**D-80750 München (DE)**

(54) **Extractor apparatus.**

(57) The invention relates generally to laboratory apparatus which use a solvent to extract an analyte from a sample liquid. The invention combines known laboratory extraction apparatus with a mixing device to reduce the amount of time necessary to extract a sufficient amount of analyte from the sample liquid. The invention does not require complicated instrumentation or a non-conducting solvent.

FIG. I

Field of the Invention

This invention relates to laboratory apparatus employing a solvent to extract an analyte from a sample.

Background of the Invention

Analytical chemists have used liquid-liquid extraction to move chemical analytes from aqueous matrices to organic solvents for decades. This is usually done to facilitate analysis of certain chemicals in the sample. Often the analysis technique is not compatible with water or the concentration of the analyte is too low for measurement. Extraction transforms the sample into a form that is compatible with the analysis technique. Extractions can also be performed for analytes contained in organic samples, as long as the organic sample is immiscible in the solvent used to extract the analyte. Many extractions are also coupled with a concentration step which makes the analyte more concentrated in the final extract. This makes it easier for the analysis technique to detect and measure the analyte.

Liquid-liquid extraction has two forms, discontinuous and continuous. Discontinuous liquid-liquid extraction is usually performed with a separatory funnel. The sample is repeatedly shaken with aliquots of an organic solvent. Each solvent aliquot is drained from the separatory funnel and combined with the others. This extraction technique is fast (1 hour) but labor intensive.

Continuous liquid-liquid extraction drips small droplets of solvent through the sample. The solvent is separated from the sample, distilled, recondensed and dripped through the sample again. This process runs continuously for many hours. This extraction technique is slow (18 hours) but does not require much labor.

Analytical laboratories supply sample test results for many industries, government agencies and research facilities. Economic pressures continually push for faster results at lower cost. Shortening the extraction time without significantly increasing labor or equipment cost is very desirable. Furthermore, since most solvents used in such extractions are dangerous to humans and to the environment, limiting the amount of solvent needed in such tests is also very desirable.

Known liquid-liquid extractors such as the ExCell, of ABC Laboratories require a non-conducting solvent and complicated and expensive equipment capable of generating an electrical field within the solvent container, as well as a pump to create a slight vacuum above the surface of the solvent. The ExCell does not provide means for concentrating the analyte.

Therefore, a need exists for a liquid-liquid extractor which provides shortened extraction time without requiring complicated or expensive instrumentation and without requiring a non-conducting solvent.

Summary of the Invention

The present invention combines continuous liquid-liquid extraction with mixing of the sample and solvent. The sample and solvent are mixed while the solvent travels through the sample. This produces smaller solvent droplets and greater solvent surface area. The mixing also increases the amount of time the solvent droplet is in contact with the sample before being transferred away from the sample. The increased surface area and contact time dramatically reduce extraction time. The present invention provides for shortened extraction time without complicated instrumentation and without requiring a non-conducting solvent.

Generally, the present invention provides an extractor for extracting an analyte from a sample with a solvent, the extractor comprising: a sample chamber for holding the sample to be processed; a solvent chamber for holding a solvent; labware, operatively connected to the sample chamber and the solvent chamber, for directing solvent from the solvent chamber to the sample chamber; and a mixing device, operatively connected to the sample chamber, for mixing the sample.

Another embodiment of the present invention provides for an extractor for extracting an analyte from a sample with a solvent, the extractor comprising: a sample chamber for holding the sample to be processed; a solvent chamber for holding a solvent to be heated; a vapor connecting arm, operatively connected at one end to an upper portion of the sample chamber and at a second end to the solvent chamber, for directing solvent vapor from the solvent chamber to the sample chamber; an extract connecting tube, operatively connected at one end to the sample chamber and at a second end to the vapor connecting arm, for transporting solvent from the sample chamber to the solvent chamber; and a mixing device, operatively connected to the sample chamber, for mixing the sample.

This embodiment of the present invention may additionally comprise one or more of the following: a condenser, connected at one end to the top of the sample chamber, for increasing condensation of solvent vapor directed to the sample chamber; a condenser disposed within the vapor connecting arm; a stopcock, disposed within the extract connecting tube, for allowing the transport of solvent by the extract connecting tube to be stopped so as to concentrate the analyte within the solvent chamber.

For extractions of analytes from aqueous samples, a preferred embodiment of the present invention includes a hydrophobic membrane, disposed between the sample chamber and the extract connecting tube, for restricting the passage of water from the aqueous sample through the extract connecting tube. By combining a mixing device with a hydrophobic membrane disposed between the sample chamber and the extract connecting tube, this embodiment of the present invention provides for shortened extraction time of an aqueous sample with a comparatively small amount of solvent, about 100 ml.

The mixing device can comprise a mechanical stirring device at least partially disposed within the sample chamber. For example, the mechanical stirring device may comprise a magnetic stirring implement disposed within the sample chamber, and a magnetic field device, disposed outside the sample chamber and adjacent the magnetic stirring implement, for causing the magnetic stirring implement to rotate. As another example, the mechanical stirring device may comprise a mixing blade disposed within the sample chamber; a motor, disposed above the sample chamber; and a stirring rod, extending upward through the sample chamber and operatively connected at one end to the mixing blade and at another end to the motor, for causing the mixing blade to spin when the stirring rod is rotated by the motor.

As another example, the mixing device can comprise a bubbling device, which mixes the sample and solvent by causing bubbles to rise in the sample and solvent. The bubbling device can comprise, for example, a heating mantle disposed at a lower portion of the sample chamber for boiling the solvent, causing bubbles and mixing. Another example of a bubbling device comprise an extension of the vapor connecting arm, one end of the extension disposed below the surface of the sample. The extension carries solvent vapor which bubbles up through the sample, causing mixing.

Brief Description of the Figures

Fig. 1 illustrates an embodiment of the present invention utilizing a basic continuous extraction apparatus and shows a schematic mixing device.

Fig. 2 illustrates an embodiment of the present invention utilizing a continuous extractor/concentrator apparatus and shows a schematic mixing device.

Fig. 3 illustrates an embodiment of the present invention utilizing a continuous extractor/concentrator apparatus and one form of mechanical stirring device.

Fig. 4 illustrates an embodiment of the present invention utilizing a continuous extractor/concentrator apparatus and another form of mechanical stirring device comprising a magnetic stir bar and magnetic field device.

Fig. 5 illustrates an embodiment of the present invention utilizing a continuous extractor/concentrator apparatus and another form of mechanical stirring device comprising a magnetic stir bar and magnetic field device.

Fig. 6 illustrates an embodiment of the present invention utilizing a continuous extractor/concentrator apparatus and one form of bubbling device.

Fig. 7 illustrates an embodiment of the present invention utilizing a continuous extractor/concentrator apparatus and another form of bubbling device. Fig. 8 illustrates an embodiment of the present invention utilizing a continuous extractor/concentrator apparatus and another form of bubbling device. Fig. 9 illustrates an embodiment of the present invention utilizing a continuous extractor/concentrator apparatus and another form of mechanical stirring device comprising a pin, a magnetic stir bar and magnetic field device.

Fig. 10 illustrates an embodiment of the present invention utilizing a continuous extractor/concentrator apparatus and another form of mechanical stirring device comprising a magnetic stir ball and magnetic field device.

Fig. 11 illustrates an embodiment of the present invention utilizing a continuous extractor/concentrator apparatus and another form of mechanical stirring device comprising a magnetic field device and a floating magnetic stir bar which rotates on a horizontal axis.

Fig. 12 illustrates an embodiment of the present invention utilizing a continuous extractor/concentrator apparatus and showing another form of mechanical stirring device comprising a magnetic field device and a floating magnetic stirring implement which rotates on a vertical axis.

Tables I and II show the concentrations of specific analytes used in the cited experiments.

Figs. 13 and 14 are graphs showing recovery of specific analytes over time with an embodiment of the present invention.

Figs. 15 and 16 are graphs showing recovery of specific analytes over time with another embodiment of the present invention.

Description of the Preferred Embodiments

The present invention combines known extraction apparatus with means for mixing the sample being processed to substantially increase the transfer rate of analyte from the sample to the solvent. As such, the present invention includes a solvent chamber for holding a solvent; a sample chamber for holding a sample; a mixing device, operatively connected to the sample chamber, for mixing the sample; and some form of labware, operatively connected to the sample chamber and the solvent chamber, for directing solvent from the solvent chamber to the sample chamber. Any labware capable of directing solvent from the solvent chamber to the sample chamber may be used. The labware can be as simple as, for example, a tube connecting the two chambers. The labware can include a stopcock or other means of restricting solvent movement.

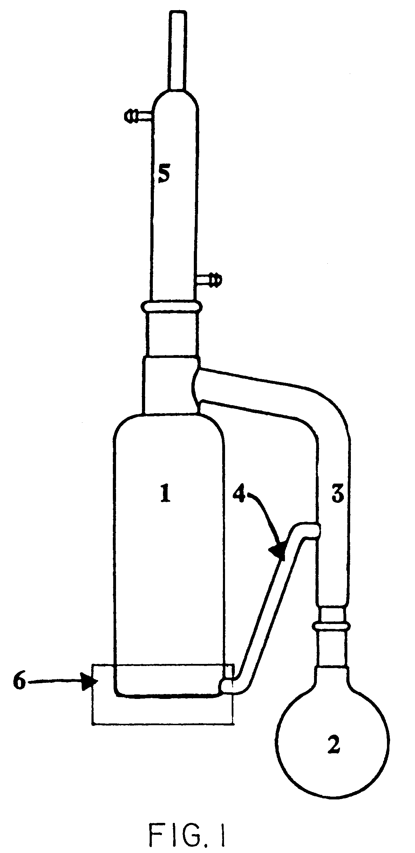

Another embodiment of the present invention combines a mixing device with well known continuous extraction apparatus. An embodiment of the present invention utilizing a basic continuous extraction apparatus is illustrated in Fig. 1. A sample chamber 1 is provided for holding solvent and sample, the sample being lighter than the solvent and disposed on top of the solvent. A solvent chamber 2 holds additional solvent. A vapor connecting arm 3 is operatively connected at one end to the sample chamber 1 and at a second end to the solvent chamber 2. An extract connecting tube 4 is operatively connected at one end to a lower portion of the sample chamber 1 and at a second end to the vapor connecting arm 3. These four components provide a circuitous route for solvent to travel and, in so doing, for passing through the sample and collecting analyte. A condenser 5 is preferably connected at one end to the top of the sample chamber 1. Mixing device 6 is operatively connected to the sample chamber 1.

In operation, the solvent in the solvent chamber 2 is heated. Solvent vapors then travel through vapor connecting arm 3 and into sample chamber 1. The condenser 5 helps condense the solvent vapor, which falls in droplets onto the surface of the sample within sample chamber 1. The solvent has a density greater than that of the sample and, therefore, sinks down through the sample, extracting analyte as it goes. Mixing means 6 mixes the sample and solvent as the solvent travels through the sample. This increases surface area contact between the solvent and the sample and also increases the contact time before the solvent has made its way through the sample. As a result, the analyte is dissolved in the solvent quicker than if no mixing took place. Solvent which has traveled through the sample then moves through the extract connecting tube 4 into vapor connecting arm 3 and back to solvent chamber 2, carrying analyte with it. This process runs continuously until enough analyte is extracted from the aqueous solution by the solvent. The extracted analyte carried to the solvent chamber will substantially remain there as solvent is continually vaporized.

The extractor illustrated in Fig. 1 may only be used for extraction of an analyte from the sample, not for concentration of the analyte in the solvent after extraction. Another embodiment of the present invention can also be used to concentrate the analyte in the solvent. Also, a preferred embodiment of the present invention is used for extractions of analytes from aqueous samples and utilizes a hydrophobic membrane to restrict water from flowing out of the sample chamber.

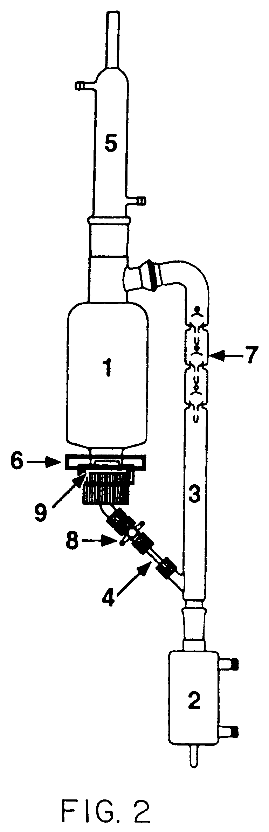

Fig. 2 illustrates a preferred embodiment of the present invention. This embodiment comprises the same basic components as the embodiment shown in Fig. 1, providing a circuitous route for solvent which travels through the sample. A sample chamber 1 is provided for holding solvent and an aqueous sample, the aqueous sample being lighter than the solvent and disposed on top of the solvent. A solvent chamber 2 holds additional solvent. A vapor connecting arm 3 is operatively connected at one end to the sample chamber 1 and at a second end to the solvent chamber 2. An extract connecting tube 4 is operatively connected at one end to a bottom portion of the sample chamber 1 and at a second end to the vapor connecting arm 3. A condenser 5 is preferably connected at one end to the top of the sample chamber 1. Mixing device 6 is operatively connected to the sample chamber 1.

It will be understood that the extract connecting tube 4 could be connected directly to the solvent chamber 2, instead of the vapor connecting arm 3. Such an arrangement would be the equivalent of the arrangement shown in the figures, as the extract connecting tube 4 would still transport solvent from the sample chamber 1 to the solvent chamber 2.

The embodiment shown in Fig. 2 also has several preferred components. The vapor connecting arm 3 includes a condenser 7. A stopcock 8 is preferably disposed within the extract connecting tube 4. The stopcock 8 may be closed to prevent fluid passage through the extract connecting tube 4 so that the analyte may be concentrated in the solvent. A hydrophobic membrane 9 is preferably disposed between the sample chamber 1 and the extract connecting tube 4. The hydrophobic membrane 9 restricts the passage of water from sample chamber 1, reducing the amount of solvent needed. With less solvent, process time is also reduced. Furthermore, the hydrophobic membrane 9 allows for a downwardly slanted extract connecting tube 4 so that solvent/aqueous sample volume ratios are not governed by apparatus requirements. The combination of a hydrophobic membrane and a mixing device combines the time savings of both.

In operation, the solvent in the solvent chamber 2 is heated. Solvent vapors then travel through vapor connecting arm 3 and into sample chamber 1. The condenser 5 helps condense the solvent vapor, which falls in droplets onto the surface of the sample within sample chamber 1. The solvent has a density greater than that of the aqueous sample and, therefore, sinks down through the sample, extracting analyte as it goes. Mixing device 6 mixes the sample and solvent as the solvent travels through the sample. This increases surface area contact between the solvent and the sample and also increases the contact time before the solvent has made its way through the sample. As a result, the analyte is dissolved in the solvent quicker than if no mixing took place.

Solvent which has traveled through the sample then moves through the hydrophobic membrane 9 and into the extract connecting tube 4. The hydrophobic membrane 9 restricts the flow of water from the aqueous sample into the extract connecting tube 4, while allowing solvent to pass through. The solvent travels through the extract connecting tube 4 into vapor connecting arm 3 and back to solvent chamber 2, carrying analyte with it. This process runs continuously until enough analyte is extracted from the sample by the solvent. The extracted analyte carried to the solvent chamber will substantially remain there as solvent is continually vaporized.

When enough analyte has been transferred to the solvent in the solvent chamber, the stopcock 8 is closed. This prevents any additional fluid from traveling through the extract connecting tube 4. Heating of solvent in the solvent chamber 2 is continued. As solvent is vaporized, the concentration of analyte in the solvent remaining in the solvent chamber 2 increases. This process is continued until a sufficient concentration of analyte in solvent is obtained.

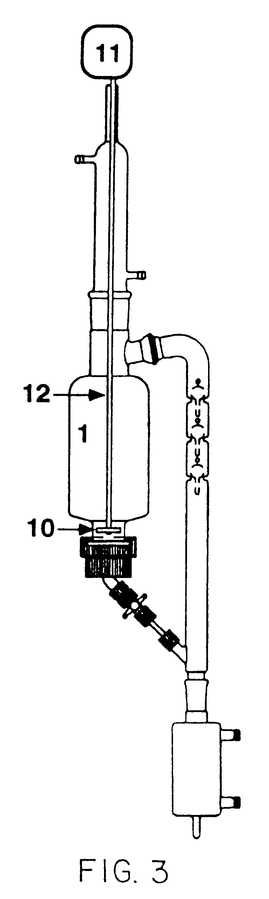

The mixing device of the present invention may be any means capable of mixing the sample and solvent without interfering with the movement of solvent through the extraction apparatus. To provide for simplicity, a preferred mixing device comprises a mechanical stirring device. Fig. 3 shows one example of a suitable mechanical stirring device. Mixing blade 10 is disposed within the sample chamber 1. The configuration of the mixing blade 10 may take any form that will provide the desired level of mixing, such as, for example, a flat star shaped wheel. A motor 11 is disposed above the sample chamber 1. Any form of motor 11 may be used. A stirring rod 12 extends upward through the sample chamber 1 and is operatively connected at one end to the mixing blade 10 and at a second end to the motor 11. The motor 11 is energized, causing the stirring rod 12 to spin and the mixing blade 10 to rotate. The rotational speed of the motor 11, and the size and shape of the mixing blade 10 determine the mixing rate.

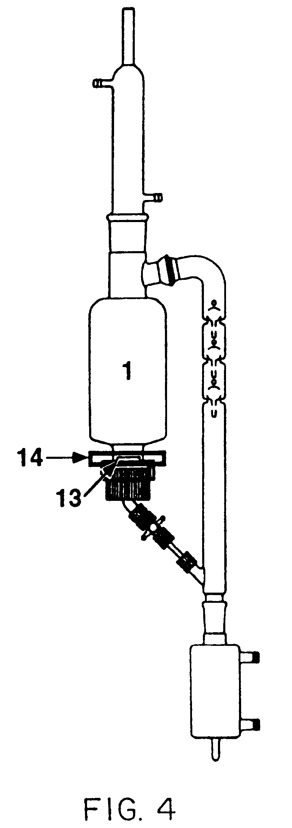

Another example of a suitable mechanical stirring device is illustrated in Fig. 4. A magnetic stirring implement 13 is placed in the sample chamber 1. In this embodiment, the magnetic stirring implement 13 is a magnetic stir bar 13. A magnetic field device 14 is disposed outside the sample chamber and adjacent the magnetic stirring implement, for causing the magnetic stirring implement to rotate. In this embodiment, the magnetic field device 14 is a magnetic collar 14 disposed at a lower portion of the sample chamber 1. Energizing the magnetic collar 14 generates a rotating magnetic field which spins magnetic stir bar 13, mixing the sample. The rotational speed of the magnetic field, and the size and shape of the magnetic stirring implement determine the mixing rate.

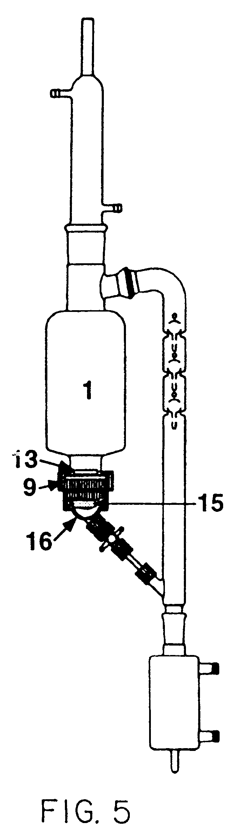

In another embodiment, illustrated in Fig. 5, magnetic stirring implement 13 can be powered by a magnetic field device 14 which is a micro-magnetic stir mechanism 15 mounted in a glass bowl 16 under the hydrophobic membrane 9. Alternatively, the micro-magnetic stir mechanism 15 can be mounted inside the bottom of the sample chamber 1.

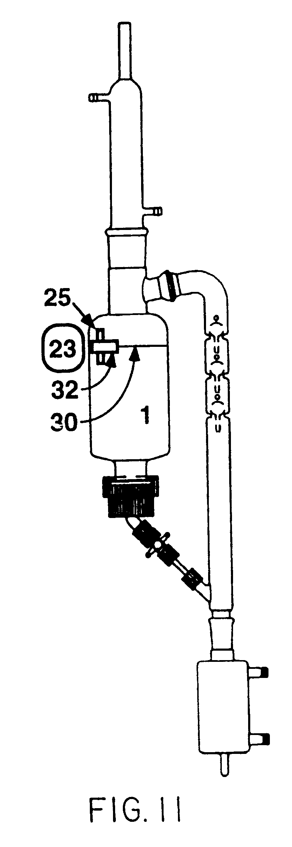

Another example of a suitable mechanical stirring device is shown in Fig. 11. A magnetic stirring implement 25, in this embodiment a magnetic stir bar 25, floats on the surface 30 of the sample within the sample chamber 1. The stir bar 25 is constructed so that it is disposed vertically, allowing the magnetic stir bar 25 to rotate vertically around the longitudinal middle of the bar. This disposition may be accomplished by, for example, placing the magnetic stir bar 25 through a buoyant article 32. The buoyant article 32 is preferably shaped so as not to substantially resist the vertical rotation of the magnetic stir bar 25. Such a shape can be, for example, a cylinder or sphere. Alternatively, the magnetic stir bar 25 and buoyant article 32 may be one piece.

A magnetic field device 23 is disposed outside the sample chamber 1 and adjacent the magnetic stir bar 25, for causing the magnetic stir bar 25 to rotate in a vertical plane (i.e. - to rotate about a horizontal axis). Magnetic field device 23 generates a rotating magnetic field which spins magnetic stir bar 25, mixing the sample. The magnetic stir bar 25 may be replaced with a magnetic stirring implement of any configuration capable of mixing the sample and solvent.

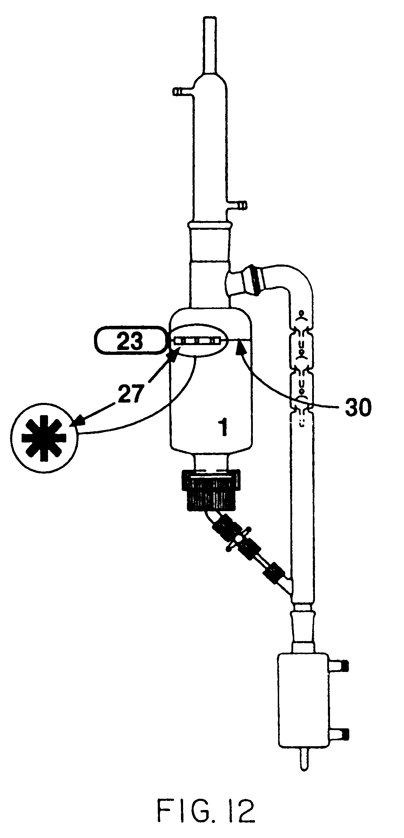

Alternatively, embodiments of the present invention may include a floating magnetic stirring implement which rotates horizontally. Fig. 12 shows an embodiment of the present invention having cross-hair shaped magnetic stirring implement 27, which can rotate about its radial center. Magnetic stirring implement 27 floats on the surface 30 of the sample in the sample chamber 1. A magnetic field device 23 is disposed outside the sample chamber 1 and adjacent the magnetic stirring implement 27, for causing the magnetic stirring implement 27 to rotate in a horizontal plane (i.e. - to rotate about a vertical axis running through radial center of the magnetic stirring implement 27). Magnetic field device 23 generates a rotating magnetic field which spins magnetic stir bar 25, mixing the sample. The magnetic stirring implement 27 may be replaced with a magnetic stirring implement of any configuration capable of mixing the sample.

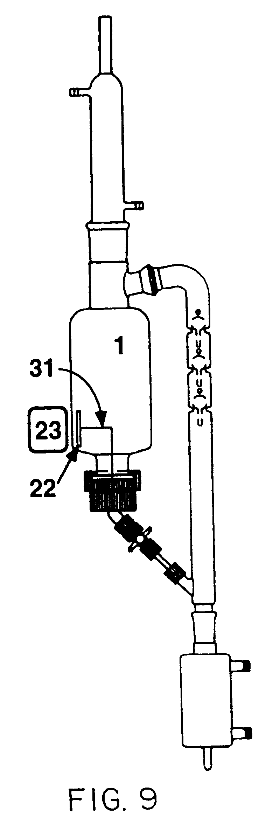

Fig. 9 shows an embodiment of a mechanical stirring device which utilizes an elbow shaped pin. One end of elbow pin 31 is immobilized at the bottom of sample chamber 1. Elbow pin 31 extends upwards into sample chamber 1 and then radially towards the inner wall of sample chamber 1. The pin 31 pierces magnetic stirring implement 22, in this embodiment a magnetic stir bar 22, which is suspended vertically, allowing magnetic stir bar 22 to rotate. Magnetic field device 23 is disposed adjacent to magnetic stir bar 22 on the opposite side of the wall of the sample chamber 1. It will be appreciated that use of such pin and magnetic stirring implement arrangements will allow the desired magnetic stirring implement to be disposed at any position in any angle or orientation desired.

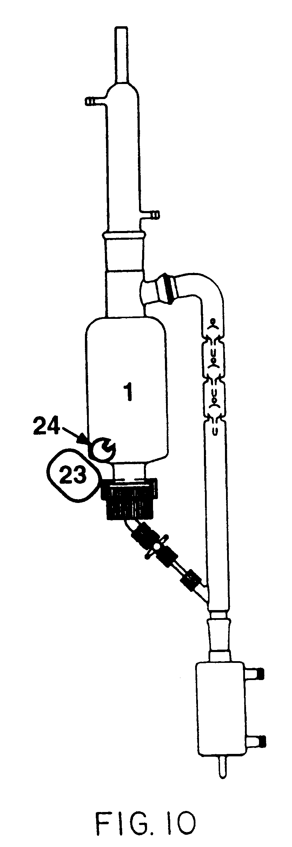

Fig. 10 illustrates another embodiment of a mechanical stirring device comprising a magnetic stirring implement 24 and a magnetic field device 23. The magnetic stirring implement 24 is configured as a magnetic stir ball 24. Magnetic stir ball 24 has geometries on its surface, such as indentations, canals, etc., which will cause mixing when magnetic stir ball 24 rotates. The magnetic field device 23 is disposed at a lower corner of the sample chamber. The magnetic power of the magnetic field device 23 is sufficient to hold magnetic stir ball 24 within this lower corner of the sample chamber. When magnetic field device 23 is energized, magnetic stir ball 24 will rotate, causing mixing.

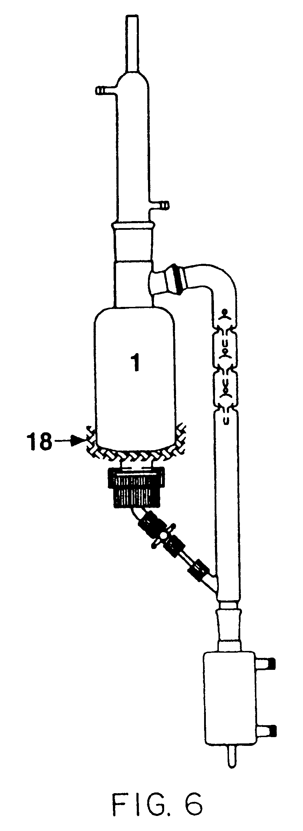

Other mixing devices besides a mechanical stirring device can be used. For example the mixing device may comprise a bubbling device which mixes the sample and solvent by causing bubbles to rise in the sample or solvent. Any device which will cause bubbles in the sample or solvent without interfering with the action of the extractor may be used. One embodiment of a bubbling device is illustrated in Fig. 6. A heating mantle 18 is preferably disposed at a lower portion of the sample chamber 1. By energizing the heating mantle 18, the solvent at the bottom of the sample chamber 1 can be boiled, causing bubbling and, thus, mixing. The solvent droplets mix randomly with the sample. The boiling rate controls the mixing rate. This system requires a fair amount of solvent at the bottom of the sample chamber. Therefore, the user is required to open and close the stopcock several times during the course of the one hour extraction. It will be appreciated that the heating mantle can be disposed adjacent to other portions of the sample chamber.

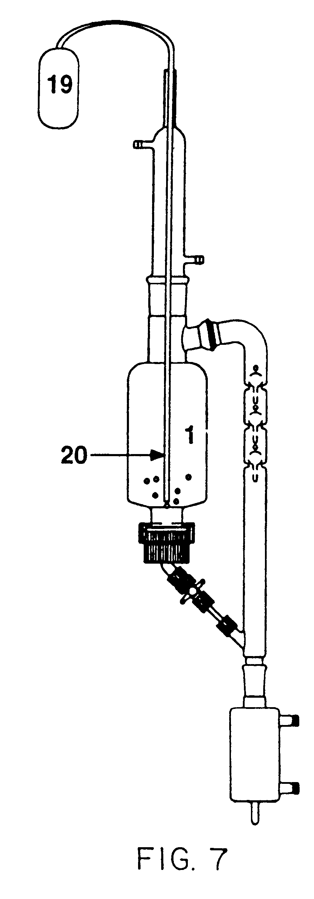

Another example of a bubbling device is illustrated in Fig. 7. A gas injector 19 is operatively connected to a lower portion of the sample chamber 1. At least part 20 of the gas injector 19 is disposed within the sample chamber 1. The depth within the sample chamber 1 of part 20 of the gas injector 19 may be adjusted based on the strength of gas injection and the desired mixing needs. The gas injector 19 produces gas bubbles within the sample, causing mixing. The rate of bubble production by the gas injector 19 controls the rate of mixing. The gas produced can be air or some inert gas, such as, for example, helium or nitrogen. The gas can be produced by any available means, such as, for example, a cylinder of compressed gas or a pump.

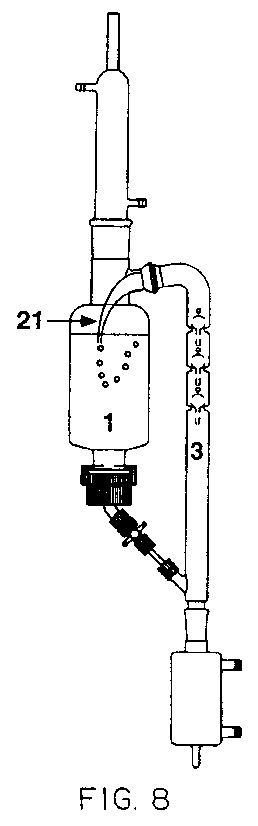

Yet another example of a bubbling device is illustrated in Fig. 8. In this embodiment, the bubbling device comprise an extension 21 of vapor connecting arm 3. The vapor connecting arm extension 21 may be a separate piece. Alternatively, the extension 21 may be part of vapor connecting arm 3. In either case, the vapor connecting arm extension 21 is operatively connected at one end to the vapor connecting arm 3. The remaining end of the vapor connecting arm extension 21 is disposed below the surface of the sample within sample chamber 1. The vapor connecting arm extension 21 directs solvent vapor from the vapor connecting arm 3 to beneath the surface of the sample in sample chamber 1. The solvent vapor bubbles up through the sample, causing mixing. The bubbling also facilitates the formation of very small solvent droplets

It will be appreciated that the mixing device of the present invention can comprise any device capable of mixing the sample and solvent and/or decreasing the solvent droplet size without significantly interfering with the extraction taking place. For example, a liquid pump operatively connected to the sample chamber, a pulsed ultrasonic horn operatively connected to the sample chamber, or a piezoeletric vibrating crystal immersed in the bottom of the sample chamber can be used as a mixing device.

Experimental

About 100 ml of methylene chloride was placed into the sample chamber of an Accelerated One Step extractor/concentrator (claimed in U.S. Patent Application Serial No. 07/809,864, incorporated herein by reference), manufactured and sold by Corning Incorporated. About 1000 ml of an aqueous solution was made up containing the analytes shown in both Table I and Table II at about the concentrations shown in Table I and Table II. This aqueous solution was placed in the solvent chamber of the Accelerated One Step extractor. The stopcock on the extract connecting tube of the Accelerated One Step was then opened. A Electrothermal heating element was modified to fit around the bottom of the sample chamber and energized sufficiently to boil the solvent at the bottom of the sample chamber. The solvent was heated and an extraction run.

At intervals of about 30 minutes, the stopcock within the extract connecting tube was closed. Heating of the solvent in the solvent chamber was continued until a solvent sample of about 1 ml remained in the solvent chamber, the rest of the solvent collecting in the sample chamber. This 1 ml solvent sample was set aside for analysis. The stopcock was opened and the extraction was continued for another 30 minutes, at which point another solvent sample of about 1 ml was obtained. This procedure was followed until four 1 ml solvent samples were recovered for analysis.

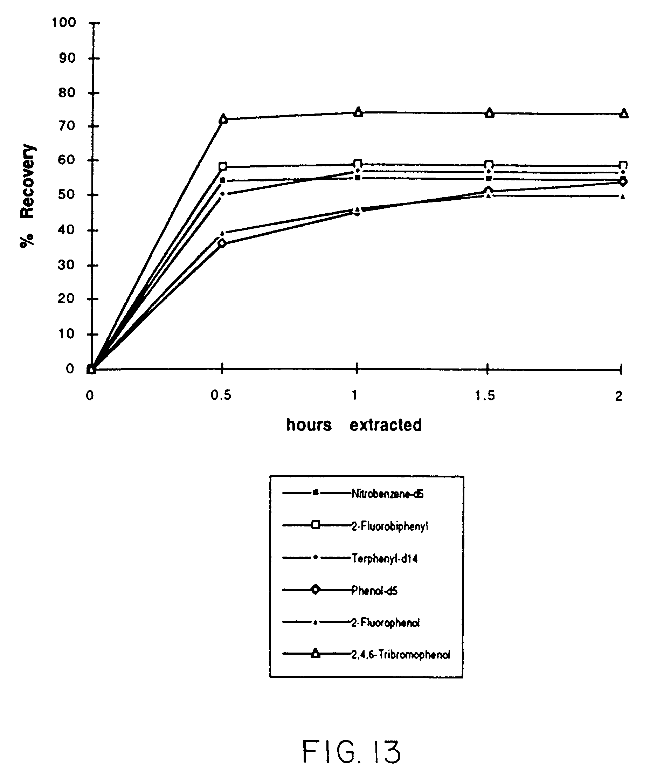

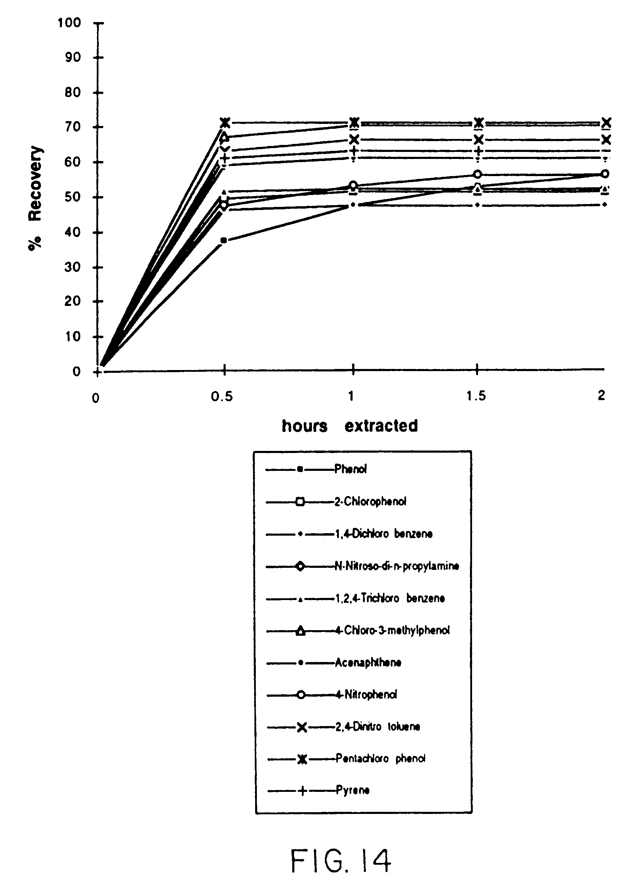

The solvent samples were run through an Extrel ELQ 400 gas chromatograph/mass spectrometer. Method 8270 of document SW846 of the Office of Solid Waste, Environmental Protection Agency was employed. The percent recovery of each analyte was determined. Figs. 13 and 14 are graphs showing the percent recovery of each analyte at the four 30 minute intervals. The data shows that substantial recovery of each analyte was obtained without two hours or sooner.

An additional experiment was run to test mechanical stirring. An Accelerated One Step was fitted with a prototype mechanical stirrer comprising a propeller cut out of Teflon tubing, a wooden dowel rod inserted in a Teflon tube, and a Craftsman variable speed drill. The dowel rod surrounded by the Teflon tube was attached at one end to the propeller. The other end was inserted into the Craftsman drill. The propeller was placed within the sample chamber of the Accelerated One Step.

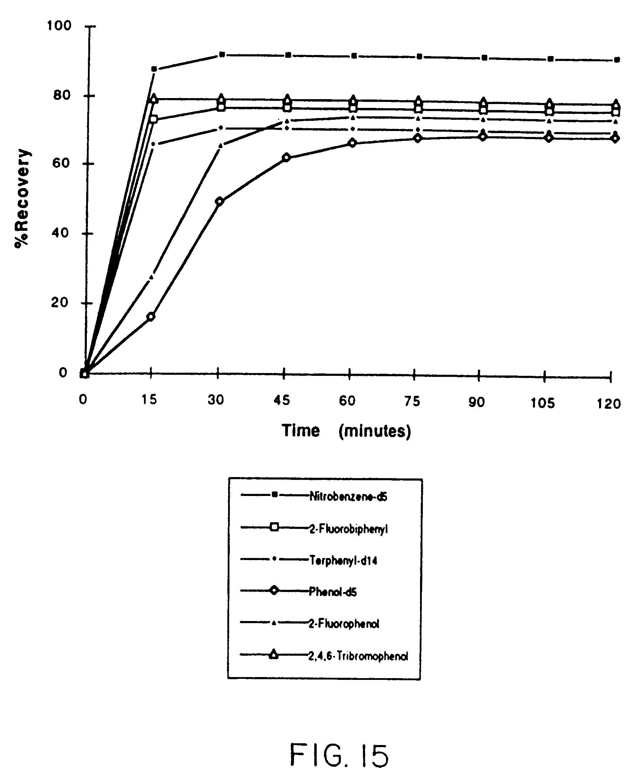

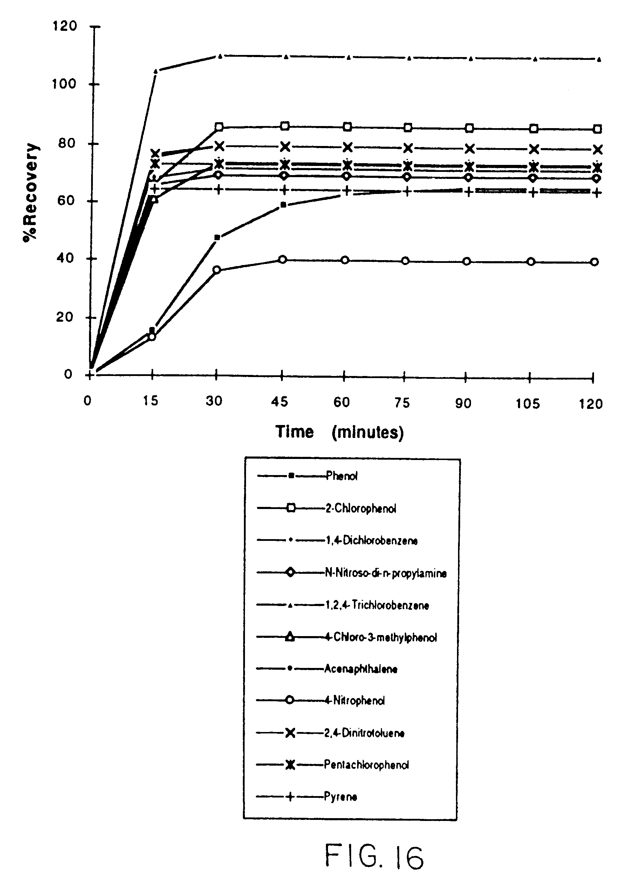

About 1000 ml of aqueous solutions containing the analytes and concentrations shown in Tables I and II was extracted in the Accelerated One Step with 100 ml of methylene chloride while the propeller rotated at about 50 revolutions per minute. Solvent samples of about 1 ml were obtained using the method described above at 15 minute intervals. The solvent samples were again run through an Extrel ELQ 400 gas chromatograph mass spectrometer using method 8270 of document SW846 of the Office of Solid Waste, Environmental Protection Agency. The percent recovery data obtained for the analytes of Table I are shown in Fig. 15 and those obtained for the analytes of Table II are shown in Fig. 16. Once again, substantial recovery of each analyte was obtained within two hours or sooner.

# TABLE I

| Symbol | Analyte | Concentration Parts per Billion |
|---|---|---|
| ——■—— | Nitrobenzene-d5 | 100 |
| ——□—— | 2-Fluorobiphenyl | 100 |
| —— ◆ —— | Terphenyl-d14 | 100 |
| ——◇—— | Phenol-d5 | 200 |
| ——▲—— | 2-Fluorophenol | 200 |
| ——△—— | 2,4,6-Tribromophenol | 200 |

# TABLE II

| Symbol | Analyte | Concentration Parts per Billion |
|---|---|---|
| ———■——— | Phenol | 200 |
| ———□——— | 2-Chlorophenol | 200 |
| ———◆——— | 1,4-Dichlorobenzene | 100 |
| ———◇——— | N-Nitroso-di-n-propylamine | 100 |
| ———▲——— | 1,2,4-Trichlorobenzene | 100 |
| ———△——— | 4-Chloro-3-methylphenol | 200 |
| ———●——— | Acenaphthalene | 100 |
| ———○——— | 4-Nitrophenol | 200 |
| ———✕——— | 2,4-Dinitrotoluene | 100 |
| ———✱——— | Pentachlorophenol | 200 |
| ———✛——— | Pyrene | 100 |

**Claims**

1. An extractor for extracting an analyte from a sample with a solvent, the extractor comprising:
    a sample chamber for holding the sample to be processed;
    a solvent chamber for holding a solvent to be heated;

a vapor connecting arm, operatively connected at one end to an upper portion of the sample chamber and at a second end to the solvent chamber, for directing solvent vapor from the solvent chamber to the sample chamber;

an extract connecting tube, operatively connected at one end to the sample chamber and at a second end to the vapor connecting arm, for transporting solvent from the sample chamber to the solvent chamber; and

a mixing device, operatively connected to the sample chamber, for mixing the sample and solvent.

2. The extractor of claim 1, further comprising:

a condenser, connected at one end to the top of the sample chamber, for increasing condensation of solvent vapor directed to the sample chamber.

3. The extractor of claim 1, wherein the vapor connecting arm includes a condenser.

4. The extractor of claim 1, further comprising:

a stopcock, disposed within the extract connecting tube, for allowing the transport of solvent by the extract connecting tube to be stopped so as to concentrate the analyte within the solvent chamber.

5. The extractor of claim 1, further comprising:

a hydrophobic membrane, disposed between the sample chamber and the extract connecting tube, for restricting the passage of water from the sample chamber to the extract connecting tube.

6. The extractor of claim 1, wherein the mixing device comprises a mechanical stirring device at least partially disposed within the sample chamber.

7. The extractor of claim 6, wherein the mechanical stirring device comprises:

a magnetic stirring implement disposed within the sample chamber; and

a magnetic field device, disposed outside the sample chamber and adjacent the magnetic stirring implement, for causing the magnetic stirring implement to rotate.

8. The extractor of claim 6 or 7, wherein the magnetic stirring implement is disposed on the surface of the sample within the sample chamber.

9. The extractor of claim 6, or 7 wherein:

the magnetic stirring implement is a magnetic stir bar; and

the magnetic field device is a magnetic collar, disposed at a lower portion of the sample chamber, for causing the magnetic stir bar to rotate, or the magnetic stirring implement is a magnetic stir ball, the magnetic stir ball being held against a side of the sample chamber by the magnetic field device.

10. The extractor of claim 7, further comprising:

a pin, disposed within the sample chamber, at least one end of the pin immobilized against an inner surface of the sample chamber; and

wherein the magnetic stirring implement is rotatably disposed on the pin.

11. The extractor of claim 6 or 7, wherein the mechanical stirring device comprises:

a mixing blade disposed within the sample chamber;

a motor, disposed above the sample chamber; and

a stirring rod, operatively connected at one end to the mixing blade and at another end to the motor and extending upward through the sample chamber, for causing the mixing blade to spin when the stirring rod is rotated by the motor.

12. The extractor of claim 1, wherein the mixing device comprises a bubbling device, operatively connected to the sample chamber, for causing bubbles to rise through the sample.

13. The extractor or claim 12, wherein the bubbling device comprises a vapor connecting arm extension, operatively connected at one end to the vapor connecting arm and having a second end disposed below the surface of the sample within the sample chamber, for directing solvent vapor from the vapor connecting arm to beneath the surface of the sample, so as to cause bubbling.

**14.** The extractor of claim 12 or 13, wherein the bubbling device comprises a heating mantle, disposed about the bottom of the sample chamber, for heating at least one of the sample and solvent to boiling, so as to cause mixing, optionally the bubbling device comprising a gas injector, at least part of the gas injector being disposed within the sample chamber, for causing bubbles to rise through the sample.

**15.** An extractor for extracting an analyte from a sample with a solvent, the extractor comprising:

a sample chamber for holding the sample to be processed;

a solvent chamber for holding a solvent to be heated;

a vapor connecting arm, operatively connected at one end to an upper portion of the sample chamber and at a second end to the solvent chamber, for directing solvent vapor from the solvent chamber to the sample chamber, the vapor connecting arm including a Snyder condenser;

an extract connecting tube, operatively connected at one end to the sample chamber and at a second end to the vapor connecting arm, for transporting solvent from the sample chamber to the solvent chamber;

a stopcock, disposed within the extract connecting tube, for allowing the transport of solvent by the extract connecting tube to be stopped so as to concentrate the analyte within the solvent chamber;

a condenser, connected at one end to the top of the sample chamber, for increasing condensation of solvent vapor directed to the sample chamber;

a hydrophobic membrane, disposed between the sample chamber and the extract connecting tube, for restricting the passage of water through the extract connecting tube; and

a mixing device, at least partially disposed within the sample chamber, for mixing the sample and solvent.

FIG. 1

FIG. 2

FIG. 3

FIG. 4

FIG. 5

FIG. 6

FIG. 7

FIG. 8

FIG. 9

FIG. 10

FIG. II

FIG. 12

FIG. 13

FIG. 14

FIG. 15

FIG. 16

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | US-A-2 660 518 (J. L. WHITE)<br>* figure 1 * | 1-3 | G01N25/14 |
| Y | GIT FACHZEITSCHRIFT FÜR DAS LABORATORIUM, vol.15, no.1, January 1971<br>pages 33 - 36<br>D. MARTIN 'EXTRAHIEREN VON FESTEN UND FLÜSSIGEN STOFFEN IM LABORATORIUM'<br>* figure 14B * | 1-3 | |
| A | FR-A-907 632 (E. BOUVETIER)<br>* figure 1 * | 1 | |
| A | FR-A-1 352 335 (A. CLÉMENT)<br>* figures 1,2 * | 1 | |
| A | GB-A-1 385 483 (R. C. SMITH)<br>* figure 1 * | 1 | |
| A | DE-A-16 48 884 (E. HEZEL)<br>* figure 1 * | 1 | TECHNICAL FIELDS SEARCHED (Int.Cl.6) |
| D,A | US-A-5 268 150 (D. T. BURKITT)<br>* the whole document * | 1 | G01N |

The present search report has been drawn up for all claims

| Place of search | Date of completion of the search | Examiner |
|---|---|---|
| THE HAGUE | 20 March 1995 | Duchatellier, M |